# EUROPEAN PATENT SPECIFICATION

(11) **EP 4 600 149 B1**
(45) Date of publication and mention of the grant of the patent: **18.11.2026**
(21) Application number: 24216357.4
(22) Date of filing: 29.11.2024
(51) Int. Cl.: B64D 11/00

(54) **DIVIDER SYSTEM AND METHOD FOR AN INTERNAL CABIN OF AN AIRCRAFT**
TRENNWANDSYSTEM UND VERFAHREN FÜR EINE INNENKABINE EINES FLUGZEUGS
SYSTÈME DE SÉPARATION ET PROCÉDÉ POUR UNE CABINE INTERNE D'UN AÉRONEF

(30) Priority: 08.02.2024 US 202418436201
(43) Date of publication of application: 13.08.2025
(60) Divisional application: 26193587.8 / 4 803 420
(73) Proprietor: The Boeing Company, Arlington, VA 22202 (US)
(72) Inventor: McIntosh, Darren Carl, ARLINGTON, 22202 (US)
(74) Representative: Plasseraud IP

(56) References cited:
- WO-A1-2017/176726
- US-A1- 2019 331 943
- US-A1- 2021 070 448

## Description

### FIELD OF THE DISCLOSURE

Examples of the present disclosure generally relate to a divider system configured to divide different sections within an internal cabin of an aircraft.

### BACKGROUND OF THE DISCLOSURE

Vehicles such as commercial aircraft are used to transport passengers between various locations. A typical aircraft includes an internal cabin having seats for passengers.

Internal cabins of many commercial aircraft have different sections, such as a first class section, a business class section, an economy section, and/or the like. Curtains can be used to separate different sections from one another. As an example, a first class section is often set apart from other areas of the internal cabin by curtains. However, certain individuals may find the curtains to be cumbersome to manipulate, and aesthetically undesirable.

US 2021/070448 A1 relates to aircraft partitions having an electrochromic display, and related methods.

WO 2017/176726 A1 relates to an aircraft interior surface and method of illuminating an aircraft interior surface.

US 2019/331943 A1 relates to an aircraft vehicle device with at least one window unit and with at least one transparency switching unit and method of using the aircraft vehicle device.

### SUMMARY OF THE DISCLOSURE

A need exists for an improved system and method for dividing sections within an internal cabin of a vehicle, such as a commercial aircraft. Further, a need exists for a system and method for providing information to passengers in different sections of an internal cabin of a vehicle.

With those needs in mind, the present disclosure provides a divider system according to claim 1, configured to separate a first section from a second section within an internal cabin of a vehicle. The divider system includes a support bracket, and one or more displays secured to the support bracket. The one or more displays extend downwardly from the support bracket. The one or more displays are configured to show electronic content thereon. The one or more displays are selectively switchable between a transparent mode and an opaque mode.

In at least one example, the vehicle is an aircraft.

In at least one example, the one or more displays comprise a transparent digital display screen. For example, the one or more displays include a transparent organic light-emitting diode (OLED) screen.

In at least one example, the divider system is not configured to extend to a floor of the internal cabin.

A fitting upwardly extends from the support bracket. The fitting is configured to secure the divider system to one or more of a stowage bin, a ceiling or a passenger service unit (PSU) within the internal cabin. The fitting is configured to removably secure the divider system to one or more of the stowage bin, the ceiling, or the PSU.

In at least one example, a control unit is in communication with the one or more displays. The control unit is configured to control operation of the one or more displays. A user interface can be in communication with the control unit. The user interface is configured to allow an individual to control operation of the one or more displays.

The one or more displays can include a single display. As another example, the one or more displays include a first display, and a second display. The first display and the second display are oriented back-to-back in relation to one another.

The present disclosure provides a method for a divider system according to claim 10.

Certain examples of the present disclosure provide an aircraft including an internal cabin having a first section and a second section, and a divider system separating the first section from the second section, as described herein.

### BRIEF DESCRIPTION OF THE DRAWINGS

Figure 1 illustrates a block diagram of a divider system within an internal cabin of a vehicle, according to an example of the present disclosure.
Figure 2 illustrates a simplified side view of the divider system, according to an example of the present disclosure.
Figure 3 illustrates a simplified side view of the divider system, according to an example of the present disclosure.
Figure 4 illustrates a perspective front view of an aircraft, according to an example of the present disclosure.
Figure 5 illustrates a perspective interior view of an internal cabin of an aircraft, according to an example of the present disclosure.
Figure 6 illustrates a perspective front view of a divider system having a display in a transparent mode, according to an example of the present disclosure.
Figure 7 illustrates a perspective front view of the divider system having the display showing electronic content thereon, according to an example of the present disclosure.
Figure 8 illustrates a perspective front view of the divider system having the display showing electronic content thereon, according to an example of the present disclosure.
Figure 9 illustrates a perspective front view of the divider system having the display showing electronic content thereon, according to an example of the present disclosure.
Figure 10 illustrates a perspective front view of the divider system having the display showing electronic content thereon, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

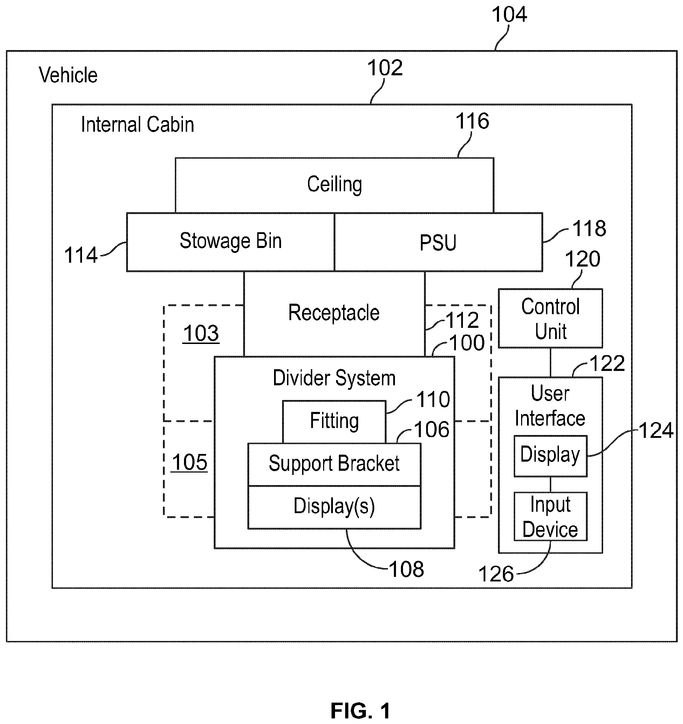

Figure 1 illustrates a block diagram of a divider system 100 within an internal cabin 102 of a vehicle 104, according to an example of the present disclosure. In at least one example, the vehicle 104 is a commercial aircraft, and the divider system 100 is within a passenger seating area of the internal cabin 102. The divider system 100 can be configured to separate a first section 103 from a second section 105. As an example, the first section 103 can be a first class section or business class section, and the second section 105 can be the business class section or an economy class section. In at least one example, the divider system 100 separates different class sections of the internal cabin 102 from one another. That is, the divider system 100 provides a defined and unmistakable separating indicator between two different sections. Optionally, the divider system 100 may not be configured to separate different sections. Also, optionally, the divider system 100 can be used with various other types of vehicles, such as automobiles, vans, buses, train cars, watercraft, spacecraft, or the like.

The divider system 100 includes a support bracket 106 that retains one or more displays 108, such as electronic monitors, screens, or the like. The display(s) 108 can be or otherwise include televisions. In at least one example, the display 108 is a transparent digital display screen. As a further example, the display 108 is an ultra-thin, lightweight transparent organic light-emitting diode (OLED) screen. The display 108 is transparent in that it is clear and visible therethrough, such as when in a transparent mode of operation. As a further example, the display 108 is sized and shaped to be easily secured to and removed from (such as for maintenance) the support bracket 106.

The display(s) 108 extend downwardly from the support bracket 106. The support bracket 106 suspends the display(s) 108 downwardly therefrom. In at least one example, the divider system 100 does not extend to a floor of the internal cabin 102. As an example, the display(s) 108 do not extend to a floor of the internal cabin 102. In at least one example, the display(s) 108 do not extend to a plane defined by an uppermost surface of seats within the internal cabin 102. The divider system 100 is not secured to a wall within the internal cabin 102. The display(s) 108 is secured to a wall within in the internal cabin 102.

The support bracket 106 is integrally formed with a fitting 110. The fitting 110 is configured to be secured within a receptacle 112 within the internal cabin 102. In at least one example, the receptacle 112 is formed on or in a stowage bin 114 extending downwardly from a ceiling 116 of the internal cabin 102. As another example, the receptacle 112 is formed on or in a passenger service unit (PSU) 118 extending downwardly from the ceiling 116. As another example, the receptacle 112 is formed on or within a rail extending between the stowage bin 114 and the PSU 118. As another example, the receptacle is formed on or in the ceiling 116. As another example, the receptacle is formed on or in the stowage bin 114, the ceiling 116, and the PSU 118.

In at least one example, the fitting 110 is configured to be removably coupled to the receptacle 112. In this manner, the fitting 110 allows the divider system 100 to be selectively secured to, and removed from the receptacle 112. As an example, the fitting 110 can be a plug that is configured to be removably secured to the receptacle 112, which can be a reciprocal socket that removably receives and retains the fitting 110. By allowing the divider system 100 to be selectively secured to and removed from one or more of the stowage bin 114, the ceiling 116, and/or the PSU 118, the divider system 100 can be selectively positioned within the internal cabin 102 depending on a desired configuration of one or more sections of the internal cabin 102. Optionally, the divider system 100 can be integrally and permanently secured to one or more of the stowage bin 114, the ceiling 116, and/or the PSU 118.

The fitting 110 and the receptacle 112 include mechanical couplings that allow for the divider system 100 to be secured to one or more of the stowage bin 114, the ceiling 116, and/or the PSU 118. The fitting 110 and the receptacle 112 can further include electrical couplings that allow for power and data signals to be received by the display(s) 108. Examples of the electrical couplings may comprise plug-and-socket interfaces utilizing spring-loaded contacts or pin-and-sleeve arrangements to ensure reliable connections during operation. As an example, magnetic couplings can be employed for alignment and connection, providing ease of engagement and disconnection. As another example, wireless power transfer technologies, such as inductive or resonant systems, can be used for power transmission, combined with short-range communication methods like Bluetooth or NFC for data transfer. As another example, integrated multi-pin connectors, featuring dedicated contacts for power, data signals, and grounding, can offer a unified and secure interface. As another example, hybrid systems combining mechanical and electrical couplings, such as conductive tracks in the fitting 110 engaging with spring-loaded contacts in the receptacle 112, may also be implemented to enhance reliability and functionality.

In at least one example, a control unit 120 is in communication with the display(s) 108, such as through one or more wired or wireless connections. The control unit 120 is also in communication with a user interface 122, such as through one or more wired or wireless connections. The user interface 122 may include a display 124 in communication with an input device 126, such as through one or more wired or wireless connections. In at least one example, the display 124 is an electronic device configured to electronically show images, videos, text, and/or the like. The display 124 can be a monitor, screen, television, touchscreen, and/or the like. The input device 126 can include a keyboard, mouse, stylus, touchscreen interface (that is, the input device 126 can be integral with the display 124), and/or the like. The display 124 is configured to show visual graphics, videos, text, and/or the like. The user interface 122 can be an attendant control panel.

The control unit 120 and the user interface 122 can be located within the internal cabin 102, such as within a galley or attendant area. As another example, the control unit 120 and the user interface 122 can be in a flight deck or cockpit of an aircraft. In at least one example, the control unit 120 and the user interface 122 are part of a computer workstation within the internal cabin 102. As another example, the control unit 120 and the user interface 122 can be part of a handheld device, such as an electronic tablet, a smartphone, or the like.

An individual can operate the display(s) 108 to show content including various messages, graphics, and the like on the display(s) 108 through inputs of the user interface 122, which are provided to the display(s) 108 through the control unit 120, which controls operation of the display(s) 108.

The display(s) 108 is configured to display various types of electronic content, such as text, images, video, and/or the like. As an example, the display(s) 108 is configured to be operated and controlled, such as by the control unit 120, to be transparent during taxi, take off, and landing to meet regulatory requirements (such as promulgated by the United States Federal Aviation Administration (FAA)) that require a flight attendant, while seated in an attendant seat, to have a direct line-of-sight view of passengers along the length of the internal cabin (FAR 25.785(h) - Direct View Requirements). As an example, the control unit 120 is in communication with the display(s) 108, such as through one or more wired or wireless connections. The control unit 120 may be in communication with another control unit, such as the control unit of the vehicle 104, using one or more wired or wireless connections. In such a case, the control unit 120 may automatically change the display(s) 108 to be to be transparent/opaque (or modes including modes therebetween, such as a semi-transparent mode and/or a semi-opaque mode) when the control unit of the vehicle 104 detects and sends the operational status (taxi, take off, landing, climbing, descending, cruising) of the vehicle 104 to the control unit 120. Accordingly, in one example, the control unit 120 may automatically change the display(s) 108 to be transparent when the control unit of the vehicle 104 detects the following operational statuses: taxi, take off, landing. In another example the control unit 120 may automatically change the display(s) 108 to be opaque when the control unit of the vehicle 104 detects the following operational statuses: climbing, descending, cruising, or parked at the gate. All these settings and other settings, may be set through the user interface 122. In at least one example, in the event of a fault or power disruption, the display(s) 108 is configured to automatically default to a full transparent mode (thereby maintaining compliance with FAR 25.785(h).

For example, the control unit 120 can operate the display(s) 108 to show initial boarding messages, such as a boarding welcome, and boarding status. As another example, the control unit 120 can operate the display(s) 108 to show instructions during flight, such as seatbelt fastening instructions before the aircraft departs an airport.

As described herein, the divider system 100 is configured to separate a first section from a second section within the internal cabin 102 of the vehicle 104. The divider system 100 includes the support bracket 106, and one or more displays 108 secured to the support bracket 106. The display(s) 108 extend downwardly from the support bracket 106. The display(s) 108 are configured to show electronic content thereon. The display(s) 108 are selectively switchable between a transparent mode and an opaque mode (which can include modes therebetween, such as a semi-transparent mode and/or a semi-opaque mode).

In at least one example, the control unit 120 can be in communication with a cabin lighting system, and configured to coordinate electronic content shown on the display(s) 108 with operation of the cabin lighting system. The control unit 120 can also be in communication with fasten seat belt lighted signs, and configured to coordinate electronic content shown on the display(s) 108 with fasten seat belt indications. The control unit 120 can also be in communication with a flight computer (or another control unit of the vehicle 104), for example, and configured to coordinate electronic content shown on the display(s) 108 with flight information. In at least one example, the control unit 120 can also be configured to show closed captioning information on the display(s) 108, such as for individuals with hearing difficulties.

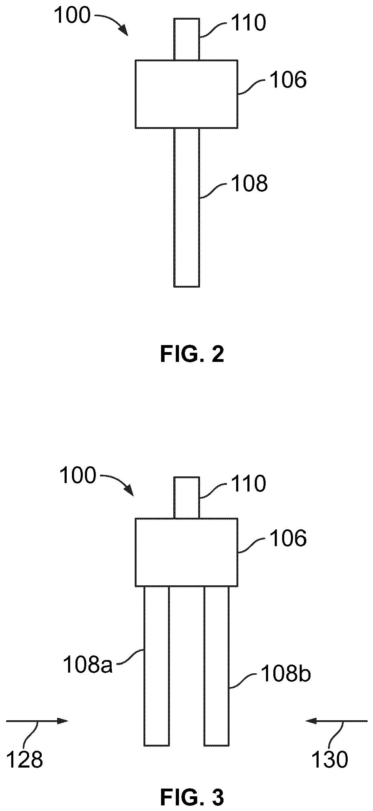

Figure 2 illustrates a simplified side view of the divider system 100, according to an example of the present disclosure. As shown, the divider system 100 includes a single display 108 supported by, and extending downwardly from, the support bracket 106.

Figure 3 illustrates a simplified side view of the divider system 100, according to an example of the present disclosure. In at least one example, the divider system 100 includes a first display 108a and a second display 108b supported by, and extending downwardly from, the support bracket 106. The first display 108a and the second display 108b are oriented back-to-back in relation to one another. Referring to Figures 1 and 3, the control unit 120 operates the first display 108a and the second display 108b so that electronic content shown on the first display 108a and the second display 108b is displayed the same to individuals viewing from a first position 128 (such as in front of the divider system 100) and individuals viewing from a second position 130, which is opposite from the first position 128 (such as behind the divider system 100). In this manner, an individual passing from the first position 128 to the second position 130 does not view inverted content on the display 108a. Similarly, an individual passing from the second position 130 to the first position 128 does not view inverted content on the display 108b.

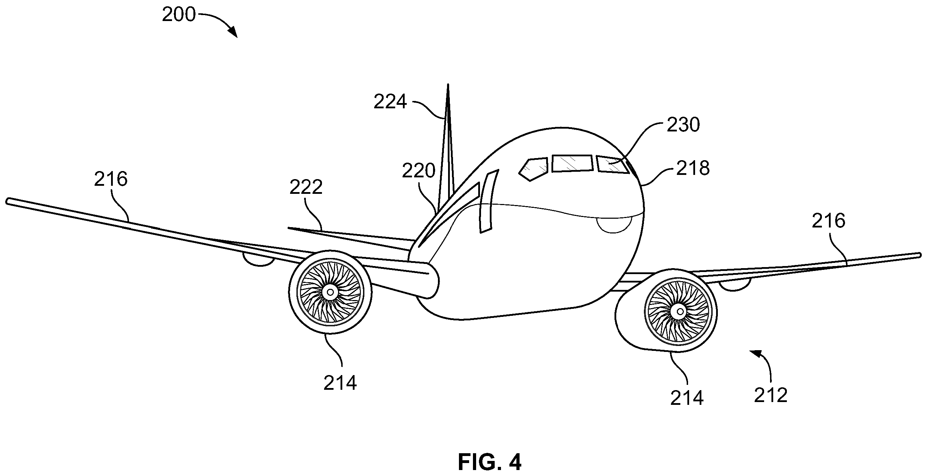

Figure 4 illustrates a perspective front view of an aircraft 200, according to an example of the present disclosure. The aircraft 200 is an example of the vehicle 104 shown in Figure 1. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like. The internal cabin 230 is an example of the internal cabin 102 shown in Figure 1.

Alternatively, instead of an aircraft, examples of the present disclosure may be used with various other vehicles, such as automobiles, buses, locomotives and train cars, watercraft, spacecraft, and the like.

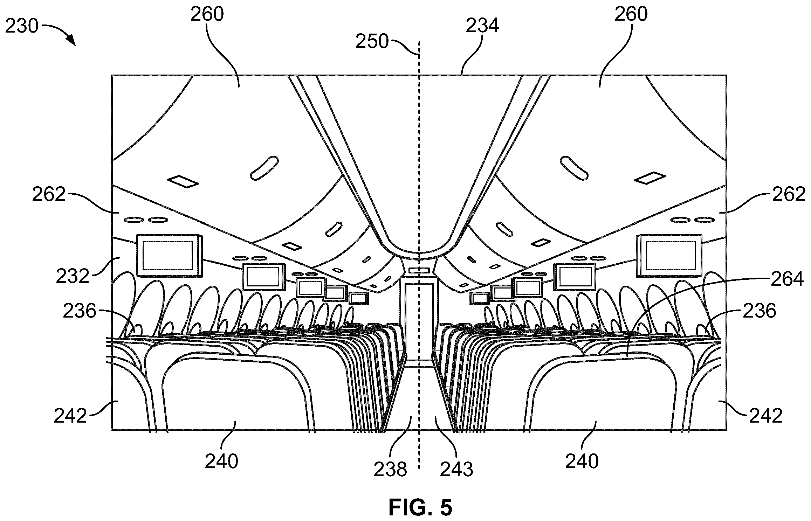

Figure 5 illustrates a perspective interior view of an internal cabin 230 of an aircraft, according to an example of the present disclosure. The internal cabin 230 is an example of the internal cabin 102 shown in Figure 1. The internal cabin 230 includes outboard walls 232 and a ceiling 234. Windows 236 may be formed within the outboard walls 232. A floor 238 supports rows of seats 240. As shown in Figure 5, a row 242 may include three seats 240 on either side of an aisle 243. However, the row 242 may include more or fewer seats 240 than shown. Additionally, the internal cabin 230 may include more aisles than shown.

As used herein, the term "outboard" means a position that is further away from a central longitudinal plane 250 of the internal cabin 230 as compared to another component. The term "inboard" means a position that is closer to the central longitudinal plane 250 of the internal cabin 230 as compared to another component.

As shown, stowage bins 260 and PSUs 262 extend downwardly from the ceiling 234. Referring to Figures 1 and 5, the display(s) 108 extend downwardly from the support bracket 106. The divider system 100 extends downwardly in relation to the ceiling 234. The support bracket 106 suspends the display(s) 108 downwardly therefrom. The display(s) 108 do not extend to the floor 238 of the internal cabin 230. In at least one example, the display(s) 108 do not extend to a plane defined by an uppermost surface 264 of the seats 240.

Referring to Figures 1-5, the control unit 120 is configured to operate the display(s) 108. In this manner, the display(s) 108 can be controlled in real time, and based on phases of flight of the aircraft, for example.

The display(s) 108 can be used to provide content management and content delivery. Passengers benefit from contextual content, as shown on the display(s) 108, based on destination, time of day and weather, and the like. The control unit 120 operates the display(s) 108 to provide real-time contextual content, while also aiding cabin operations for the crew. For example, during boarding, the display(s) 108 can present welcoming, informative guidance. During takeoff/taxi/landing, the display(s) 108 can offer a direct, transparent view therethrough for the crew to see without impediment. That is, the control unit 120 can operate the display(s) 108 to selectively switch between an opaque mode (in which electronic content is shown on an opaque screen that may not provide a clear view therethrough), a semi-transparent mode (in which electronic content is shown on a screen that is at least partially visible therethrough), and a transparent mode (in which the display(s) 108 are clear to allow viewing therethrough). Electronic content can also be shown on the display(s) 108 in the transparent mode. As an example, during flight, the display(s) 108 can be operated to create unique and desirable environments for all classes. As already noted, the control unit 120 may be in communication with another control unit of the vehicle 104. In such a case, the control unit 120 may automatically change the display(s) 108 to be to be transparent, semi-transparent, semi-opaque, or opaque, when the control unit of the vehicle 104 detects and sends the operational status (taxi, take off, landing, climbing, descending, cruising) of the vehicle 104 to the control unit 120.

As used herein, the term "control unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 120 may be or include one or more processors that are configured to control operation, as described herein.

The control unit 120 is configured to execute a set of instructions that are stored in one or more data storage units or elements (such as one or more memories), in order to process data. For example, the control unit 120 may include or be coupled to one or more memories. The data storage units may also store data or other information as desired or needed. The data storage units may be in the form of an information source or a physical memory element within a processing machine.

The set of instructions may include various commands that instruct the control unit 120 as a processing machine to perform specific operations such as the methods and processes of the various examples of the subject matter described herein. The set of instructions may be in the form of a software program. The software may be in various forms such as system software or application software. Further, the software may be in the form of a collection of separate programs, a program subset within a larger program, or a portion of a program. The software may also include modular programming in the form of object-oriented programming. The processing of input data by the processing machine may be in response to user commands, or in response to results of previous processing, or in response to a request made by another processing machine.

The diagrams of examples herein may illustrate one or more control or processing units, such as the control unit 120. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 120 may represent processing circuitry such as one or more of a field programmable gate array (FPGA), application specific integrated circuit (ASIC), microprocessor(s), and/or the like. The circuits in various examples may be configured to execute one or more algorithms to perform functions described herein. The one or more algorithms may include aspects of examples disclosed herein, whether or not expressly identified in a flowchart or a method.

As used herein, the terms "software" and "firmware" are interchangeable, and include any computer program stored in a data storage unit (for example, one or more memories) for execution by a computer, including RAM memory, ROM memory, EPROM memory, EEPROM memory, and non-volatile RAM (NVRAM) memory. The above data storage unit types are exemplary only, and are thus not limiting as to the types of memory usable for storage of a computer program.

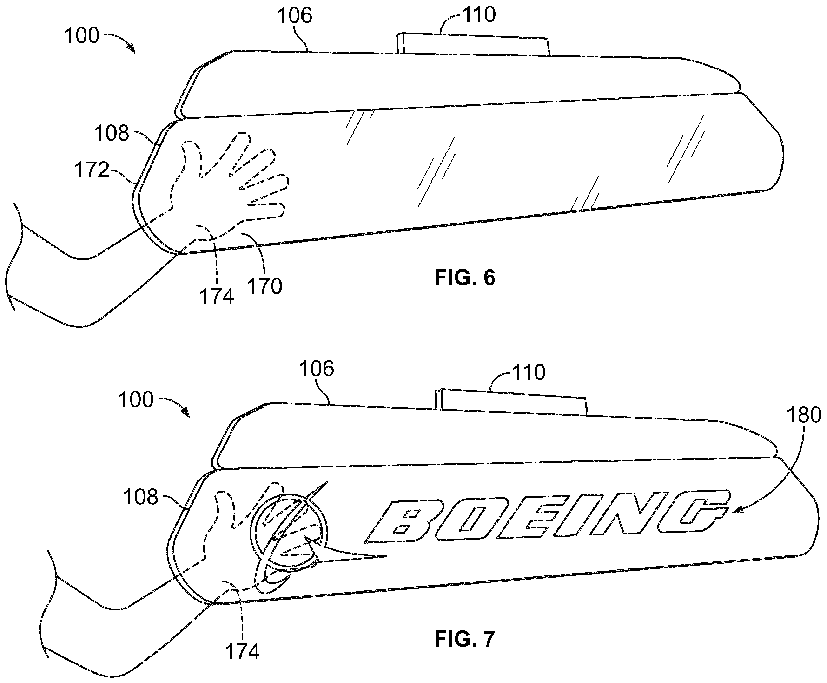

Figure 6 illustrates a perspective front view of the divider system 100 having the display 108 in a transparent mode, according to an example of the present disclosure. As shown, the fitting 110 extends upwardly from the support bracket 106. The display 108 extends downwardly from the support bracket 106, opposite from the fitting 110. The display 108 can be longer than the support bracket 106. Optionally, the support bracket 106 can be longer than the display 108. The fitting 110, the support bracket 106, and the display 108 can be sized and shaped differently than shown.

Referring to Figures 1-6, when the display 108 is in the transparent mode, an individual is able to see through the display 108. For example, an individual viewing from a front perspective is able to view through a front face 170 of the display 108 and through a second face 172 of the display 108 to see an object, such as a hand 174, behind the second face 172.

Figure 7 illustrates a perspective front view of the divider system 100 having the display 108 showing electronic content 180 thereon, according to an example of the present disclosure. Referring to Figures 1 and 7, the electronic content 180 can include text, graphics, or video regarding a particular entity, such as The Boeing Company. The control unit 120 operates the display 108 to be in a semi-transparent mode, in which the electronic content 180 is shown on the display 108, but an object, such as the hand 174 can still be seen through the display 108. Optionally, the control unit 120 can operate the display 108 to be in an opaque mode, in which the object cannot be seen through the display 108.

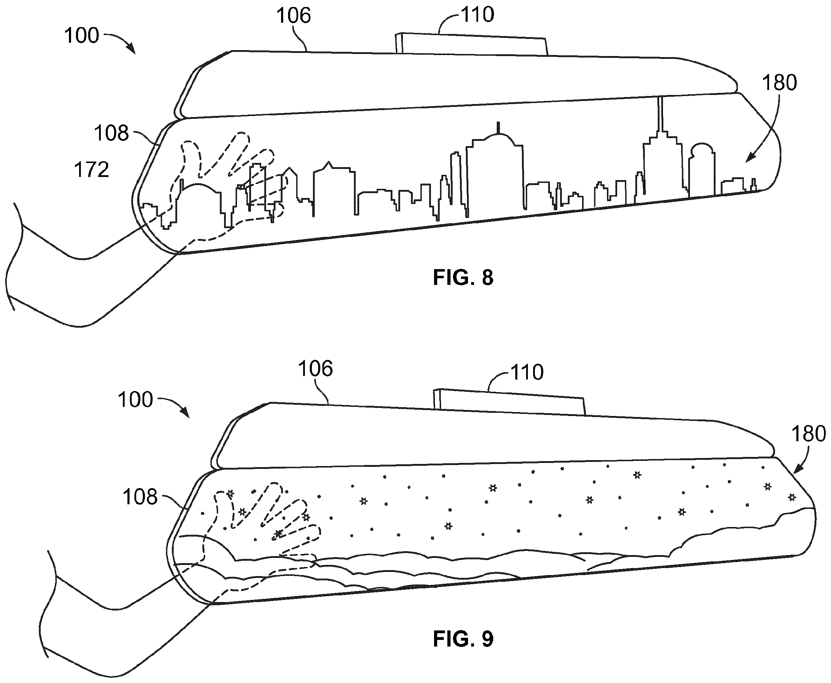

Figure 8 illustrates a perspective front view of the divider system 100 having the display 108 showing electronic content 180 thereon, according to an example of the present disclosure. In this example, the electronic content 180 can include an electronic image or video, such as showing a city skyline (such as the skyline of a city in proximity to an airport). The display 108 can show the electronic content 180 in an opaque mode, a semi-transparent mode, or a transparent mode.

Figure 9 illustrates a perspective front view of the divider system 100 having the display 108 showing electronic content 180 thereon, according to an example of the present disclosure. In this example, the electronic content 180 can include an electronic image or video showing a horizon during a particular time of day. The display 108 can show the electronic content 180 in an opaque mode, a semi-transparent mode, or a transparent mode. The electronic image or video can be coordinated with a cabin lighting system, so when the internal cabin is dimmed to allow for sleep (for example, a night mode) an image can be displayed that is in keeping with, or themed with the mode of lighting (for example, a night sky and/or starry sky).

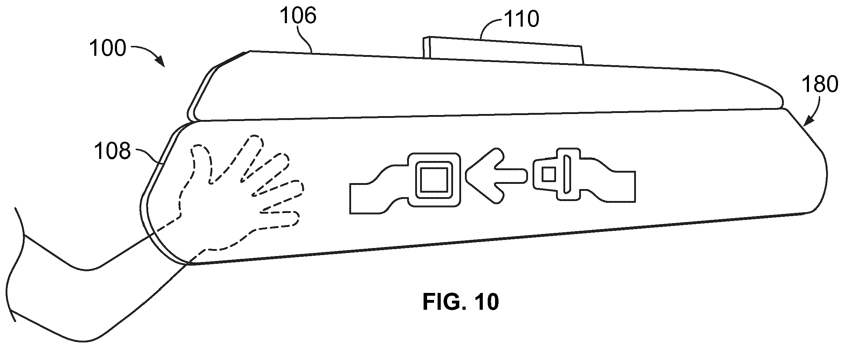

Figure 10 illustrates a perspective front view of the divider system 100 having the display 108 showing electronic content 180 thereon, according to an example of the present disclosure. In this example, the electronic content 180 can include an instruction for a flight, such as a fasten seat belt image. The display 108 can show the electronic content 180 in an opaque mode, a semi-transparent mode, or a transparent mode. The electronic image or video can be coordinated with fasten seat belt lighted signs, and can interrupt other content shown on the display 108.

Referring to Figures 1-10, as an example, a flight attendant (or in another example, the control unit 120 itself, being in communication with the control unit of the vehicle 104) prepares the internal cabin 102 for a particular phase of flight operation, such as taxi, take-off, landing, or the like. During such preparation, the flight attendant engages the user interface 122 to switch the display(s) 108 into a fully transparent mode, thereby allowing full viewing through the display(s) 108. Thus, in particular phases of flight, such as during taxi, take-off, and landing, the display(s) 108 provide a fully transparent, unobstructed view therethrough. At a different phase of flight, such as cruise, the flight attendant (or in another example, the control unit 120 itself, being in communication with the control unit of the vehicle 104) can engage the user interface 122 to operate the display(s) 108 to show various types of electronic content 180, such as in a transparent mode, a semi-transparent mode, and/or an opaque mode of operation. In at least one example, in the event of a fault or power disruption, the display(s) 108 is configured to automatically default to a full transparent mode (thereby maintaining compliance with FAR 25.785(h).

As described herein, examples of the present disclosure improved systems and methods for dividing sections within an internal cabin of a vehicle, such as a commercial aircraft. Further, examples of the present disclosure provide systems and methods for providing information to passengers in different sections of an internal cabin of a vehicle.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims.

## Claims

1. A divider system (100) for an internal cabin (102, 230) of a vehicle (104), the divider system (100) being configured to separate a first section (103) from a second section (105) within the internal cabin (102, 230) of the vehicle (104), the divider system (100) comprising:
a support bracket (106) integrally formed with a fitting (110) extending upwardly from the support bracket (106), wherein the fitting (110) is configured to removably secure the divider system (100) to one or more of a stowage bin (114, 260), a ceiling (116, 234) or a passenger service unit (PSU) (118, 262) within the internal cabin (102, 230); and
one or more displays (108) secured to the support bracket (106), wherein the one or more displays (108) extend downwardly from the support bracket (106), wherein the one or more displays (108) are configured to show electronic content thereon, and wherein the one or more displays (108) are selectively switchable between a transparent mode and an opaque mode.

2. The divider system (100) of claim 1, wherein the vehicle (104) is an aircraft.

3. The divider system (100) of claim 1 or 2, wherein the one or more displays (108) comprise a transparent digital display (108) screen.

4. The divider system (100) of any one of claims 1 to 3, wherein the one or more displays (108, 124) comprise a transparent organic light-emitting diode (OLED) screen.

5. The divider system (100) of any one of claims 1 to 4, wherein the divider system (100) is not configured to extend to a floor (238) of the internal cabin (102, 230).

6. The divider system (100) of any one of claims 1 to 5, further comprising a control unit (120) in communication with the one or more displays (108), wherein the control unit (120) is configured to control operation of the one or more displays (108).

7. The divider system (100) of claim 6, further comprising a user interface (122) in communication with the control unit (120), wherein the user interface (122) is configured to allow an individual to control operation of the one or more displays (108).

8. The divider system (100) of any one of claims 1 to 7, wherein the one or more displays (108) comprises a single display (108).

9. The divider system (100) of any one of claims 1 to 7, wherein the one or more displays (108) comprise:
a first display (108a); and
a second display (108b),
wherein the first display (108a) and the second display (108b) are oriented back-to-back in relation to one another.

10. A method for a divider system (100) according to claim 1, configured to separate a first section (103) from a second section (105) within an internal cabin (102, 230) of a vehicle (104), the method comprising:
removably securing the divider system (100) to one or more of a stowage bin (114, 260), a ceiling (116, 234), or a passenger service unit (PSU) (118, 262) within the internal cabin (102, 230) by the fitting (110);
showing electronic content on the one or more displays (108); and
selectively switching the one or more displays (108) between the transparent mode and the opaque mode.

11. The method of claim 10, wherein the one or more displays (108) comprise a transparent organic light-emitting diode (OLED) screen.

12. The method of claim 10 or 11, further comprising controlling, by a control unit (120) in communication with the one or more displays (108), operation of the one or more displays (108).

## Patentansprüche

1. Trennwandsystem (100) für eine Innenkabine (102, 230) eines Fahrzeugs (104), wobei das Trennwandsystem (100) konfiguriert ist, um innerhalb der Innenkabine (102, 230) des Fahrzeugs (104) einen ersten Bereich (103) von einem zweiten Bereich (105) zu separieren, wobei das Trennwandsystem (100) aufweist:
eine Trägerklammer (106), die integral mit einem Montageteil (110) gebildet ist, das sich von der Trägerklammer (106) aufwärts erstreckt, wobei das Montageteil (110) konfiguriert ist, um das Trennwandsystem (100) lösbar an einem Ablagebehälter (114, 260) und/oder einer Raumdecke (116, 234) und/oder einer Passagierserviceeinheit (PSU) (118, 262) innerhalb der Innenkabine (102, 230) anzubringen; und
eine oder mehrere Sichtanzeigen (108), die an der Trägerklammer (106) angebracht sind, wobei die eine oder mehreren Sichtanzeigen (108) sich von der Trägerklammer (106) abwärts erstrecken, wobei die eine oder mehreren Sichtanzeigen (108) konfiguriert sind, um darauf elektronischen Inhalt darzustellen, und wobei die eine oder mehreren Sichtanzeigen (108) selektiv zwischen einem transparenten Modus und einem opaken Modus umschaltbar sind.

2. Trennwandsystem (100) nach Anspruch 1, wobei das Fahrzeug (104) ein Flugzeug ist.

3. Trennwandsystem (100) nach Anspruch 1 oder 2, wobei die eine oder mehreren Sichtanzeigen (108) einen transparenten Bildschirm (108) vom Typ Digitalanzeige aufweisen.

4. Trennwandsystem (100) nach einem der Ansprüche 1 bis 3, wobei die eine oder mehreren Sichtanzeigen (108, 124) einen transparenten Bildschirm vom Typ organische lichtemittierende Diode (OLED) aufweisen.

5. Trennwandsystem (100) nach einem der Ansprüche 1 bis 4, wobei das Trennwandsystem (100) nicht konfiguriert ist, um sich bis zu einem Boden (238) der Innenkabine (102, 230) zu erstrecken.

6. Trennwandsystem (100) nach einem der Ansprüche 1 bis 5, ferner aufweisend eine Steuereinheit (120) in Kommunikation mit der einen oder den mehreren Sichtanzeigen (108), wobei die Steuereinheit (120) konfiguriert ist, um einen Betrieb der einen oder mehreren Sichtanzeigen (108) zu steuern.

7. Trennwandsystem (100) nach Anspruch 6, ferner aufweisend eine Benutzerschnittstelle (122) in Kommunikation mit der Steuereinheit (120), wobei die Benutzerschnittstelle (122) konfiguriert ist, um einer Person zu erlauben, einen Betrieb der einen oder mehreren Sichtanzeigen (108) zu steuern.

8. Trennwandsystem (100) nach einem der Ansprüche 1 bis 7, wobei die eine oder mehreren Sichtanzeigen (108) eine einzige Sichtanzeige (108) aufweisen.

9. Trennwandsystem (100) nach einem der Ansprüche 1 bis 7, wobei die eine oder mehreren Sichtanzeigen (108) aufweisen:
eine erste Sichtanzeige (108a); und
eine zweite Sichtanzeige (108b),
wobei die erste Sichtanzeige (108a) und die zweite Sichtanzeige (108b) Rückseite-an-Rückseite in Beziehung zueinander orientiert sind.

10. Verfahren für ein Trennwandsystem (100) nach Anspruch 1, das konfiguriert ist, um innerhalb einer Innenkabine (102, 230) eines Fahrzeugs (104) einen ersten Bereich (103) von einem zweiten Bereich (105) zu separieren, wobei das Verfahren aufweist:
lösbares Anbringen des Trennwandsystems (100) an einem Ablagebehälter (114, 260) und/oder einer Raumdecke (116, 234) und/oder einer Passagierserviceeinheit (PSU) (118, 262) innerhalb der Innenkabine (102, 230) mithilfe der Trägerklammer (110);
Darstellen von elektronischem Inhalt auf der einen oder den mehreren Sichtanzeigen (108); und
selektives Umschalten der einen oder mehreren Sichtanzeigen (108) zwischen dem transparenten Modus und dem opaken Modus.

11. Verfahren nach Anspruch 10, wobei die eine oder mehreren Sichtanzeigen (108) einen transparenten Bildschirm vom Typ organische lichtemittierende Diode (OLED) aufweisen.

12. Verfahren nach Anspruch 10 oder 11, ferner aufweisend Steuern eines Betriebs der einen oder mehreren Sichtanzeigen (108) mithilfe einer Steuereinheit (120), die in Kommunikation mit der einen oder den mehreren Sichtanzeigen (108) ist.

## Revendications

1. Système de séparation (100) pour une cabine interne (102, 230) d'un véhicule (104), le système de séparation (100) étant configuré pour séparer une première section (103) d'une seconde section (105) à l'intérieur de la cabine interne (102, 230) du véhicule (104), le système de séparation (100) comprenant :
une console de support (106) formée d'une seule pièce avec un raccord (110) s'étendant vers le haut à partir de la console de support (106), dans lequel le raccord (110) est configuré pour fixer de manière amovible le système de séparation (100) à un ou plusieurs d'un coffre de rangement (114, 260), d'un plafond (116, 234) ou d'une unité de service passagers (PSU) (118, 262) à l'intérieur de la cabine interne (102, 230) ; et
un ou plusieurs écrans (108) fixés à la console de support (106), dans lequel les un ou plusieurs écrans (108) s'étendent vers le bas à partir de la console de support (106), dans lequel les un ou plusieurs écrans (108) sont configurés pour représenter du contenu électronique sur ceux-ci, et dans lequel les un ou plusieurs écrans (108) sont sélectivement commutables entre un mode transparent et un mode opaque.

2. Système de séparation (100) selon la revendication 1, dans lequel le véhicule (104) est un aéronef.

3. Système de séparation (100) selon la revendication 1 ou 2, dans lequel les un ou plusieurs écrans (108) comprennent un écran d'écran numérique transparent (108).

4. Système de séparation (100) selon l'une quelconque des revendications 1 à 3, dans lequel les un ou plusieurs écrans (108, 124) comprennent un écran transparent à diode électroluminescente organique (OLED).

5. Système de séparation (100) selon l'une quelconque des revendications 1 à 4, dans lequel le système de séparation (100) n'est pas configuré pour s'étendre à un plancher (238) de la cabine interne (102, 230).

6. Système de séparation (100) selon l'une quelconque des revendications 1 à 5, comprenant en outre une unité de commande (120) en communication avec les un ou plusieurs écrans (108), dans lequel l'unité de commande (120) est configurée pour commander le fonctionnement des un ou plusieurs écrans (108).

7. Système de séparation (100) selon la revendication 6, comprenant en outre une interface utilisateur (122) en communication avec l'unité de commande (120), dans lequel l'interface utilisateur (122) est configurée pour permettre à un individu de commander le fonctionnement des un ou plusieurs écrans (108).

8. Système de séparation (100) selon l'une quelconque des revendications 1 à 7, dans lequel les un ou plusieurs écrans (108) comprennent un seul écran (108).

9. Système de séparation (100) selon l'une quelconque des revendications 1 à 7, dans lequel les un ou plusieurs écrans (108) comprennent :
un premier écran (108a) ; et
un second écran (108b),
dans lequel le premier écran (108a) et le second écran (108b) sont orientés dos à dos l'un par rapport à l'autre.

10. Procédé pour un système de séparation (100) selon la revendication 1, configuré pour séparer une première section (103) d'une seconde section (105) à l'intérieur d'une cabine interne (102, 230) d'un véhicule (104), le procédé comprenant :
la fixation libérable du système de séparation (100) à un ou plusieurs d'un coffre de rangement (114, 260), d'un plafond (116, 234) ou d'une unité de service passagers (PSU) (118, 262) à l'intérieur de la cabine interne (102, 230) par le raccord (110) ;
la représentation de contenu électronique sur les un ou plusieurs écrans (108) ; et
la commutation sélective des un ou plusieurs écrans (108) entre le mode transparent et le mode opaque.

11. Procédé selon la revendication 10, dans lequel les un ou plusieurs écrans (108) comprennent un écran transparent à diode électroluminescente organique (OLED).

12. Procédé selon la revendication 10 ou 11, comprenant en outre la commande, par une unité de commande (120) en communication avec les un ou plusieurs écrans (108), du fonctionnement des un ou plusieurs écrans (108).
